Europäisches Patentamt

European Patent Office

Office européen des brevets

(19)

(11) Veröffentlichungsnummer: **0 445 177 B1**

## (12) EUROPÄISCHE PATENTSCHRIFT

(45) Veröffentlichungstag der Patentschrift: **15.06.94**

(51) Int. Cl.5: **H04N 11/00**

(21) Anmeldenummer: **89913083.5**

(22) Anmeldetag: **27.11.89**

(86) Internationale Anmeldenummer:
**PCT/EP89/01432**

(87) Internationale Veröffentlichungsnummer:
**WO 90/06657 (14.06.90 90/14)**

(54) **KOMPATIBLES FERNSEHÜBERTRAGUNGSVERFAHREN.**

(30) Priorität: **28.11.88 DE 3840054**

(43) Veröffentlichungstag der Anmeldung:
**11.09.91 Patentblatt 91/37**

(45) Bekanntmachung des Hinweises auf die
Patenterteilung:
**15.06.94 Patentblatt 94/24**

(84) Benannte Vertragsstaaten:
**AT BE DE ES FR GB IT LU NL SE**

(56) Entgegenhaltungen:
**EP-A- 0 114 693**
**DE-C- 3 306 765**

(73) Patentinhaber: **TELEFUNKEN Fernseh und
Rundfunk GmbH
Göttinger Chaussee 76
D-30453 Hannover(DE)**

(72) Erfinder: **HOLOCH, Gerhard
Friedenheimerstrasse 151
D-8000 München 21(DE)**

(74) Vertreter: **Einsel, Robert, Dipl.-Ing.
TELEFUNKEN Fernseh und Rundfunk GmbH
Patent- und Lizenzabteilung
Göttinger Chaussee 76
D-30453 Hannover (DE)**

**Beschreibung**

Die Erfindung betrifft ein kompatibles Fernsehübertragungsverfahren.

Derartige Übertragungsverfahren sind aus den folgenden Literaturstellen bekannt:

Toth, A.G., Tsinberg, M., Rhodes, C.W.: "NTSC Compatible HDTV System", IEEE Transactions on Consumer Electronics, Feb. 1988;

Isnardi, M.A. et al.: "Encoding for Compatibility and Recovorability in the ACT System", IEEE Transactions on Broadcasting, Vol. BC-33, No. 4, Dec. 87;

Schreiber, W.F.: "Improved Television Systems: NTSC and Beyond", SMPTE Journal, Vol. 96, No. 8, August 87;

Tonge, Gary: "Compatible HDTV", Broadcast Systems Engineering July 1988;

Glenn, William E., Glenn, Karen G.: "High Definition Television Compatible Transmission System", IEEE Transactions on Broadcasting, Vol. BC-33, No.4, Dec. 87;

Nishzawa, T. et al: "HDTV and ADTV Transmission Systems. MUSE and its Family.", NAB Las Vegas, April 1988.

Für verbesserte Fernsehübertragungssysteme erweist es sich schon aus Gründen der Akzeptanz durch die Öffentlichkeit als erforderlich, das Bild-Seitenverhältnis der Fernsehempfänger von bisher 4:3 auf 16:9 (= empfohlenes Bildformat künftiger HDTV-Standards) zu erhöhen, ohne die Kompatibilität zu existierenden Fernsehnormen (PAL, NTSC, SECAM) zu verlieren.

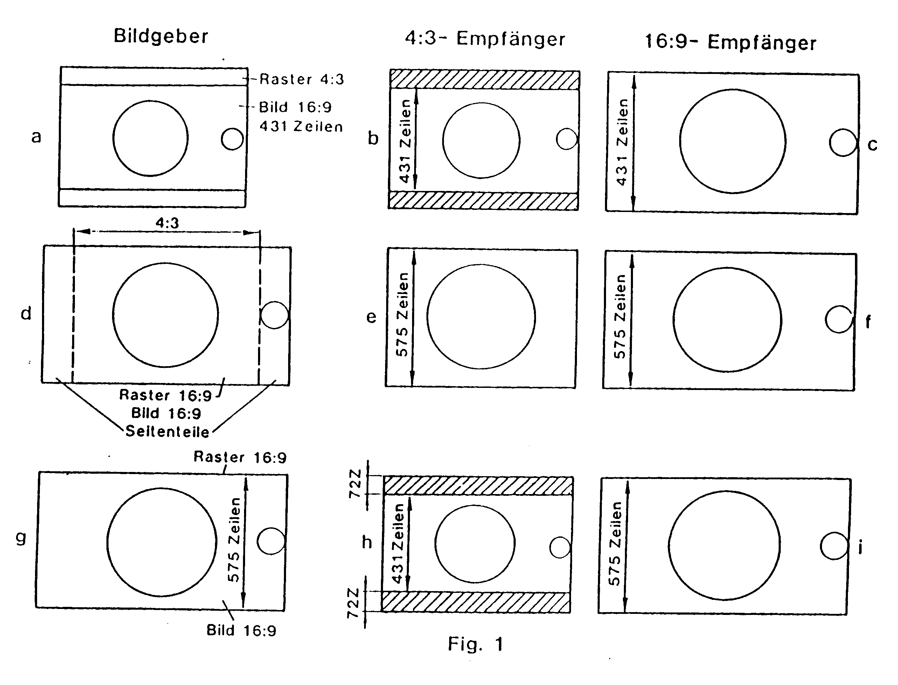

Für die Realisierung eines vergrößerten Bild-Seitenverhältnisses sind verschiedene Vorschläge aus den eingangs erwähnten Literaturstellen bekannt, die anhand der Fig. 1a bis 1i erläutert werden sollen.

1. Bei dem Vorschlag gemäß Fig. 1a, z.B. bei der Abtastung von Breitwandfilmen, wird durch Weglassen von Zeilen am oberen und unteren Bildrand eines 4:3-Bildformats ein Bildausschnitt entsprechend einem 16:9-Bildformat erzeugt. Beispielsweise bei der PAL- und SECAM-Norm bedeutet dies eine Zeilenreduktion von 575 aktiven Zeilen auf 431 aktive Zeilen. Auf dem kompatiblen 4:3-Empfänger (Fig. 1b) würde zwar der volle Bildinhalt wiedergegeben, jedoch mit nur 431 aktiven Zeilen sowie schwarzen Balken am oberen und unteren Bildrand. Diese schwarzen Balken würden bei einem 16:9-Empfänger (Fig. 1c) zwar entfallen, doch ist dann die Auflösung wegen der verringerten Zeilenzahl gegenüber einer herkömmlichen Abtastung mit 575 aktiven Zeilen reduziert.

2. Bei dem Vorschlag gemäß Fig. 1d wird bei der Abtastung in der Bildquelle die Zeilenlänge relativ zur Bildhöhe erhöht, so daß ein Bild im Format 16:9 entsteht. Die Seitenteile, welche das 4:3-Format zum 16:9-Format ergänzen, werden so übertragen, daß sie von einem herkömmlichen 4:3-Empfänger (Fig. 1e) nicht verarbeitet werden. Dies bedeutet zwar eine Wiedergabe mit nicht reduzierter vertikaler Auflösung (z.B. aktive 575 Zeilen bei der PAL- und SECAM-Norm), doch geht im 4:3-Empfänger die in den Seitenteilen enthaltene Bildinformation verloren. Der 16:9-Empfänger (Fig. 1f) gibt dagegen die volle Bildinformation mit 575 aktiven Zeilen wieder. Dabei wird jedoch die in den Seitenteilen (Fig. 1d) enthaltene, getrennt übertragene und empfangene Bildinformation angesetzt, was zu sichtbaren Nahtstellen führt.

3. Bei dem Vorschlag gemäß Fig. 1g (z.B. D2-MAC-Spezifikation) wird ebenfalls bei der Abtastung in der Bildquelle die Zeilenlänge relativ zur Bildhöhe erhöht, so daß wiederum ein Bildformat von 16:9 entsteht. Im Gegensatz zu 2.) werden jedoch die Seitenteile nicht getrennt, sondern kontinuierlich übertragen. Der 16:9-Empfänger (Fig. 1i) bietet deshalb ein Bild mit voller Bildinformation und 575 aktiven Zeilen, jedoch ohne den Nachteil von seitlichen Nahtstellen. Dafür treten beim bekannten 4:3-Empfänger (Fig. 1h) ohne zusätzliche Maßnahmen Geometrieverzerrungen auf. Bei MAC-Empfängern ist vorgesehen, durch Übertragung eines Steuersignals die Vertikalamplitude oder die Zeit-Dekompression so zu ändern, daß die Geometrieverzerrungen kompensiert werden. Bei der Änderung der Zeilenkompression geht jedoch bei einem 4:3-Empfänger Bildinhalt verloren. Bei dem in Fig. 1h dargestellten Fall einer Änderung der Vertikalamplitude treten zwar am oberen und unteren Bildrand schwarze Balken auf, doch wird der volle Bildinhalt wiedergegeben. Bei den herkömmlichen Fernsehnormen PAL, NTSC und SECAM ist jedoch eine automatische Geometriekorrektur überhaupt nicht möglich.

Der Erfindung liegt die Aufgabe zugrunde, ein mit herkömmlichen Fernsehnormen (PAL, NTSC, SECAM) kompatibles Fernsehübertragungsverfahren anzugeben, welches bei Verwendung einer 16:9-Abtastung in der Bildquelle eine Wiedergabe durch einen 16:9-Empfänger mit praktisch voller systeminhärenter Qualität gestattet, ohne bei herkömmlichen 4:3-Fernsehempfängern Bildverzerrungen hervorzurufen.

Diese Aufgabe wird durch die kennzeichnenden Merkmale der Patentansprüche 1 und 2 gelöst. Vorteilhafte Weiterbildungen der Erfindung ergeben sich aus den Unteransprüchen.

Die Erfindung wird anhand eines Ausführungsbeispiels in den Zeichnungen erläutert. Es zeigt:

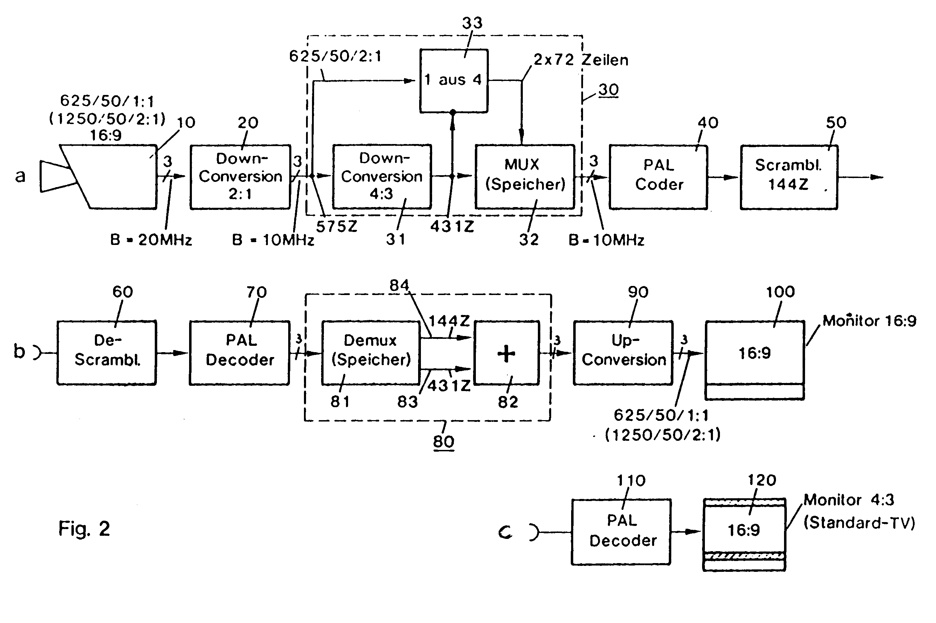

Fig. 2a    ein Blockschaltbild der senderseitigen Ausführungsform eines das erfindungsgemäße Verfahren verwendenden Fernsehübertragungssystems,

Fig. 2b ein Blockschaltbild der empfängerseitigen Anordnung bei dem Fernsehübertragungssystem nach Fig. 2a.

In Fig. 2a tastet eine Bildquelle 10 ein Bild in einem Raster mit einem 16:9-Bildformat ab. Im dargestellten Beispiel entsprechen die von der Bildquelle 10 erzeugten Bildsignale einem Standard 625/50/2:1, 625/50/1:1 oder 1250/50/2:1, was einer Zeilenzahl von 625 bzw. 1250, einer Bildwechselfrequenz von 50 Hz und progressiver (1:1) oder Zwischenzeilen-Abtastung (2:1) entspricht. Die Bandbreite des Bildsignals am Ausgang der Bildquelle 10 beträgt beispielsweise im Fall von 625/50/2:1 10 MHz und in den beiden anderen Fällen 20 MHz.

Im Fall von 625/50/1:1 und 1250/50/2:1 ist der Bildquelle 10 eine erste Abwärts-Konvertierstufe 20 nachgeschaltet, welche das Bildsignal am Ausgang der Bildquelle 10 in ein Bildsignal entsprechend einer herkömmlichen Fernsehnorm mit 625/50/2:1 konvertiert.

Das 625/50/2:1-Bildsignal wird einer Bildsignalverarbeitungsstufe 30 zugeführt, welche den Kern der Erfindung auf der Senderseite bildet. Die Bildsignalverarbeitungsstufe 30 weist eine zweite Abwärts-Konvertierstufe 31 auf, welche jeweils aus vier Zeilen des ankommenden Bildsignals drei auswählt. Dies kann dadurch erfolgen, daß entweder jede vierte Zeile des Bildsignals abgesondert wird oder, wie noch anhand eines Beispiels gezeigt wird, indem jeweils aus vier aufeinanderfolgenden Zeilen des ankommenden Bildsignals drei Zeilen interpoliert werden. Infolge dieser 4:3-Konversion in der zweiten Abwärts-Konverterstufe 31 werden aus den 575 aktiven Zeilen des Eingangs-Bildsignals 431 aktive Zeilen erzeugt. Das Signal am Ausgang der zweiten Abwärts-Konvertierstufe 31 wird sowohl einer Selektionsstufe 33 als auch einem Multiplexer 32 (Speicher) zugeführt. Die Selektionsstufe 33 verarbeitet durch Vergleich des Bildsignals am Eingang der Bildsignalverarbeitungsstufe 30 mit dem abwärtskonvertierten Bildsignal am Ausgang der zweiten Abwärts-Konvertierstufe 31 diejenigen 144 Zeilen bzw. Bildinhalte, welche bei der Abwärtskonvertierung in der zweiten Abwärts-Konvertier-Stufe 31 wegfallen. Im Multiplexer 32 werden die Bildsignale der zweiten Abwärts-Konvertierstufe 31 und der Selektionsstufe 33 so geordnet, daß die Zeilen des abwärtskonvertierten Signals der zweiten Abwärts-Konverterstufe 31 symmetrisch zur Bildmitte zu liegen kommen und spatial komprimiert sind und daß in den freiwerdenden spatialen Räumen am oberen und unteren Bildrand jeweils die Hälfte der 144 Zeilen aus der Selektionsstufe 33 zugesetzt werden.

Das Ausgangssignal des Multiplexers 32 bzw. der Bildverarbeitungsstufe 30 wird in einem nachgeschalteten PAL-Coder 40 codiert. Die in den spatialen Räumen am oberen und unteren Bildrand zugesetzten Zeilen aus der Selektionsstufe 33 können in der Verwürfelungsstufe 50 hinter dem PAL-Coder 40 verwürfelt werden, um auf einem herkömmlichen 4:3-Empfänger 120 (Fig. 2b) wie Rauschbalken am oberen und unteren Bildrand wiedergegeben zu werden. Diese wirken für den Betrachter eines 4:3-Empfänger 120 nicht so störend wie ein stark komprimiert dargestellter Bildinhalt aus den vierten Zeilen in diesen Balken.

Das Signal am Ausgang der Bildsignalverarbeitungsstufe 30 weist eine Bandbreite von 10 MHz auf entsprechend der Bandbreite des Signals am Ausgang der ersten Abwärts-Konvertierstufe 20. Um aus dem 10 MHz-Bildsignal ein kompatibles PAL-Signal zu erzeugen, kann der PAL-Coder 40 eine Frequenzaufspaltung durchführen, wobei in einem ersten Kanal die Signalspektren bis zu 5 MHZ und in einem zweiten Kanal die Signalspektren von 5 bis 10 MHz verarbeitet werden.

Dies kann z.B. in vorteilhafter Weise entsprechend einem Verfahren gemäß DE-PS 33 38 192 erfolgen, um Übersprech-Effekte zwischen Luminanz- und Chrominanzkomponenten zu vermeiden. Der zweite Kanal kann in einem im wesentlichen nicht ausgenutzten spektralen Raum innerhalb des ersten Kanals übertragen werden.

Es kann aber auch die Bandbreite der Bildquelle auf die Hälfte reduziert sein und damit für die Wiedergabe im 16:9-Empfänger eine Bandbreite von 5 MHz benutzt werden.

Alternativ zu der in Fig. 2a dargestellten Ausführungsform kann die erste Abwärts-Konvertierstufe 20 auch nach der Bildsignalverarbeitungsstufe 30 angeordnet werden, was Vorteile für die Abwärtskonvertierung in der zweiten Abwärts-Konvertierstufe 31 haben kann. Desweiteren kann alternativ die Verwürfelungsstufe 50 in dem Signalzweig zwischen der Selektionsstufe 33 und dem Multiplexer 32 angeordnet werden.

Die bei der Ausführungsform nach Fig. 2a vorgesehene Abwärtskonvertierung (erste Abwärts-Konvertierstufe 20) entweder aus einem progressiven Bildsignalstandard (625/50/1:1) oder aus einem höherzeiligem Bildsignalstandard (1250/50/2:1) erlaubt eine korrekte vertikale Vorfilterung des Ausganssignals der Fernsehbildquelle 10. Dadurch werden Alias-Störungen vermindert. Diese Vorfilterung kann vorteilhaft bewegungsadaptiv durchgeführt werden.

In den spatialen Räumen am oberen und unteren Bildrand können auch gemäß DE 3929967 Koeffizienten einer vertikalen diskreten Cosinustransformation übertragen werden, mit deren Hilfe im 16:9-Empfänger aus den 431 aktiven Zeilen 575 aktive Zeilen gewonnen werden und die im 4:3-Empfänger einem Rauschsignal noch ähnlicher sehen.

Der in Fig. 2b dargestellte empfangsseitige Teil des Fernsehübertragungssystems ist einem 16:9-Empfänger 100 vorgeschaltet. Dabei wird die sendeseitige Signalverarbeitung in umgekehrter Reihenfolge durchgeführt. Und zwar wird das Empfangssignal einer Entwürfelungs-Stufe 60 zugeführt, welche die Verwürfelung der am oberen und unteren Bildrand zugesetzten Zeilen rückgängig macht. Der anschließende PAL-Decoder 70 erzeugt ein YUV-Signal, was in Fig. 2b durch die Ziffer "3" an dem Signalausgang des PAL-Decoders 70 kenntlich gemacht ist. Das YUV-Signal am Ausgang des PAL-Decoders 70 wird einer Bildsignalverarbeitungsstufe zugeführt, welche den empfangsseitigen Kern der Erfindung verkörpert. Die Bildsignalverarbeitungsstufe 80 umfaßt einen Demultiplexer 81 (Speichor), welcher die symmetrisch zur Bildmitte übertragenen 431 Zeilen spatial dekomprimiert (erster Ausgang 83), sowie die am oberen und unteren Bildrand übertragenen 144 Zeilen separiert und spatial richtig zuordnet (zweiter Ausgang 84). In dem nachgeschalteten Zeilenkombinierer 82 erfolgt die Einführung der 144 Zeilen (zweiter Ausgang 84) in richtiger Zeilenreihenfolge in die spatial dekomprimierten 431 Zeilen (erster Ausgang 83).

Das Ausgangssignal der Bildsignalverarbeitungsstufe 80 kann in einer Aufwärts-Konvertierstufe 90 bewegungsadaptiv von dem Übertragungssignal 625/50/2:1 in den Wiedergabestandard 625/50/1:1, 1250/50/2:1, 625/100/2:1 oder 1250/100/2:1 gewandelt werden, um eine verbesserte Bildwiedergabe auf einem nachgeschalteten 16:9-Empfänger 100 zu erzielen. Die Bildwiedergabe entspricht der Darstellung gemäß Fig. 1i mit dem Bild-Seitenverhältnis 16:9 und 575 aktiven Zeilen im Falle des Standards 650/50/2:1 oder 650/50/1:1 oder 625/100/2:1.

In Fig. 2c ist ferner der Fall einer kompatiblen Bildsignalwiedergabe mit einem herkömmlichen 4:3-Fernsehempfänger 120 dargestellt, welcher einen herkömmlichen PAL-Decoder 110 enthält. Die Bildwiedergabe entspricht der Darstellung in Fig. 1h, wobei - wie vorstehend bereits erwähnt wurde - die am oberen und unteren Bildrand wiedergegebenen zwei * 72 = 144 Zeilen infolge der Verwürfelung (Verwürfelungsstufe 50) als Rauschbänder erscheinen. Durch die Wiedergabe im 16:9-Format auf dem 4:3-Empfänger 120 geht keine Information verloren.

Der 16:9-Empfänger 100 wird zweckmäßigerweise als Mehrnormen-Empfänger ausgelegt, um insbesondere in der Lage zu sein, auch herkömmliche Fernsehsignale mit einem Bild-Seitenverhältnis von 4:3 wiedergeben zu können, wie dies insbesondere im Falle von archivierten Bildmaterial der Fall ist. Der 16:9 Empfänger 100 kann für diesen Zweck so ausgelegt werden, daß er die Bildbreite voll ausschreibt, wodurch am oberen und unteren Bildrand Informationen verloren gehen. Alternativ kann der 16:9-Empfänger 100 auch so ausgelegt werden, daß man bei reduzierter Rastergröße (bzw. reduzierter Vertikalamplitude und Komprimierung) am linken und rechten Bildrand schwarze Streifen erhält.

Wie bereits erwähnt wurde, kann die Auswahl von drei aus vier Zeilen des am Eingang der Bildsignalverarbeitungsstufe ankommenden Bildsignals alternativ dadurch erfolgen, daß aus jeweils vier aufeinanderfolgenden Zeilen drei Zeilen interpoliert werden. Ein Beispiel für eine derartige Interpolation zeigt die folgende Tabelle I.

## TABELLE I

| Zeilen-Nr. | Zeilen-kennung | Interpolierte 431 Zeilen | separierte 144 Zeilen |
|---|---|---|---|
| 1 | A | A | |
| 2 | B | | |
| | | 2/3*B + 1/3*C = B' | |
| 3 | C | | C |
| | | 1/3*C + 2/3*D = C' | |
| 4 | D | | |
| 5 | A | A | |
| \| | \| | \| | \| |
| \| | \| | \| | \| |
| \| | \| | \| | \| |

Der kompatible 4:3-Empfänger wertet nur die 431 Zeilen im 16:9-Format aus. Im verbesserten 16:9-Empfänger werden alle 575 aktiven Zeilen entsprechend der folgenden Tabelle II rekonstruiert:

## TABELLE 2

| Zeilen-Nr. | Rekonstruktion aus den 431 Zeilen und den 144 Zeilen | Zeilen-kennung |
|---|---|---|
| 1 | A | A |
| 2 | 3/2*B' - 1/2*C | B |
| 3 | C | C |
| 4 | 3/2*C' - 1/2*C | D |
| \| | \| | \| |
| \| | \| | \| |
| \| | \| | \| |

Für Fernsehübertragungssysteme mit anderen Zeilenzahlen, z.B. 525 (NTSC), werden die in der Beschreibung genannten Zeilenzahlen und Frequenzen entsprechend angepaßt.

**Patentansprüche**

1. Mit herkömmlichen Fernsehnormen kompatibles Fernsehübertragungsverfahren, bei dem bildquellenseitig mit einem Raster entsprechend einem vergrößerten Bild-Seiten-Verhältnis, insbesondere von 16:9, abgetastet wird, **gekennzeichnet** durch folgende Verfahrensschritte:

    a) Jede vierte der aktiven Zeilen des Bildsignals wird abgesondert und die verbleibenden aktiven Zeilen werden entsprechend vertikal komprimiert, so daß diese verbleibenden Zeilen rastermäßig wieder nebeneinanderliegen;

    b) in den dadurch frei werdenden Zeilen am oberen und unteren Bildrand werden die abgesonderten vierten Zeilen, z.B. in verwürfelter Form, zugesetzt;

    c) das resultierende Bildsignal wird codiert übertragen und

    d) aus dem empfangenen, decodierten Bildsignal wird das ursprüngliche Bildsignal mit dem vergrößerten Bild-Seitenverhältnis dadurch wieder rekonstruiert, daß die am oberen und unteren Bildrand zugesetzten Zeilen, gegebenenfalls nach erfolgter Entwürfelung, in richtiger Zeilenreihenfolge in die übrigen, vertikal wieder dekomprimierten Zeilen eingefügt werden,

    wobei die Signale sowohl mit herkömmlichen 4:3-Empfängern (Fig. 2c) als auch mit an das System angepaßten Empfängern (Fig. 2b) für das vergrößerte Bild-Seiten-Verhältnis decodiert werden können und bei herkömmlichen 4:3-Empfängern die abgesonderten vierten Zeilen am oberen und unteren Bildrand angeordnet und die verbleibenden aktiven Zeilen dazwischen angeordnet werden.

2. Mit herkömmlichen Fernsehnormen kompatibles Fernsehübertragungsverfahren, bei dem bildquellenseitig mit einem Raster entsprechend einem vergrößerten Bild-Seiten-Verhältnis, insbesondere von 16:9, abgetastet wird, **gekennzeichnet** durch folgende Verfahrensschritte:

    a) für jeweils vier aufeinanderfolgende aktive Zeilen des Bildsignals werden drei Zeilen durch eine vertikale Interpolation gebildet;

    b) für jede Gruppe von vier aufeinanderfolgenden Zeilen wird eine Zeile ausgesondert und in den durch die vertikale Interpolation freiwerdenden Zeilen am oberen und unteren Bildrand, z.B. in verwürfelter Form, zugesetzt;

    c) das resultierende Bildsignal wird codiert übertragen, und

    d) aus dem empfangenen, decodierten Bildsignal wird das ursprüngliche Bildsignal mit dem vergrößerten Bild-Seiten-Verhältnis dadurch rekonstruiert, daß die am oberen und unteren Bildrand zugesetzten Zeilen, gegebenenfalls nach erfolgter Entwürfelung, in richtiger Zeilenreihenfolge in die übrigen, vertikal entsprechend invers interpolierten Zeilen eingefügt werden,

    wobei die Signale sowohl mit herkömmlichen 4:3-Empfängern (Fig. 2c) als auch mit an das System angepaßten Empfängern (Fig. 2b) für das vergrößerte Bild-Seiten-Verhältnis decodiert werden können und bei herkömmlichen 4:3-Empfängern die abgesonderten vierten Zeilen am oberen und unteren Bildrand angeordnet und die verbleibenden aktiven Zeilen dazwischen angeordnet werden.

3. Fernsehübertragungsverfahren nach Anspruch 1 oder 2, bei dem bildquellenseitig ohne Zeilensprung abgetastet wird, **dadurch gekennzeichnet**, daß vor dem Schritt a) oder nach dem Schritt b) eine Umwandlung in die gewünschte Fernsehnorm mit Zeilensprung erfolgt.

4. Fernsehübertragungsverfahren nach einem der Ansprüche 1 bis 3, bei dem bildquellenseitig mit verdoppelter Zeilenzahl abgetastet wird, **dadurch gekennzeichnet**, daß vor dem Schritt a) oder nach dem Schritt b) eine Abwärtswandlung in die Zeilenzahl der gewünschten Fernsehnorm erfolgt.

5. Fernsehübertragungsverfahren nach einem der Ansprüche 3 oder 4, **dadurch gekennzeichnet**, daß bei dem Schritt d) eine Umwandlung in ein höherzeiliges und/oder zeilensprungfreies Bildsignal erfolgt.

6. Fernsehübertragungsverfahren nach einem oder mehreren der Ansprüche 1, 2, 3 und 5, **dadurch gekennzeichnet**, daß in den frei werdenden Zeilen am oberen und unteren Bildrand digitale Zusatzinformationen übertragen werden, mit denen aus den vertikal komprimiert oder interpoliert übertragenen Zeilen ein Bildsignal ohne Zeilensprung oder ein Bildsignal mit erhöhter horizontaler Auflösung gebildet werden kann.

7. Fernsehübertragungsverfahren nach Anspruch 6 , **dadurch gekennzeichnet**, daß die Zusatzinformationen Koeffizienten einer eindimensionalen vertikalen diskreten Cosinustransformation enthalten.

8. Fernsehübertragungsverfahren nach einem oder mehreren der vorhergehenden Ansprüche, **dadurch gekennzeichnet**, daß horizontale Frequenzanteile des bildquellenseitig abgetasteten Rasters, die in ihrer Frequenz über die bekannte maximal übertragbare Frequenz des Übertragungskanals hinausgehen, innerhalb von im wesentlichen unbenutzten mehrdimensionalen Spektralräumen des übertragenen Fernsehsignals angeordnet werden.

9. Coder für ein mit herkömmlichen Fernsehnormen kompatibel übertragbares Fernsehsignal, bei dem das Quell-Bildsignal mit einem Raster entsprechend einem vergrößerten Bild-Seiten-Verhältnis, insbesondere von 16:9, abgetastet wurde, und der enthält:
   - eine Bildsignal-Verarbeitungsstufe (30), die durch eine vertikale Interpolation (31) für jeweils vier aufeinanderfolgende aktive Zeilen des Bildsignals drei aufeinanderfolgende Zeilen bildet und die für jede Gruppe von vier aufeinanderfolgenden aktiven Zeilen des Bildsignals eine Zeile aussondert (33) und in den durch die vertikale Interpolation freiwerdenden Zeilen am oberen und unteren Bildrand, z.B. in verwürfelter Form, zusetzt (32);
   - einen nachfolgenden Farbcoder (40), wobei die farb-codierten Signale sowohl mit herkömmlichen 4:3-Empfängern als auch mit an das System angepaßten Empfängern für das vergrößerte Bild-Seiten-Verhältnis decodiert werden können und bei herkömmlichen 4:3-Empfängern die abgesonderten vierten Zeilen am oberen und unteren Bildrand angeordnet sind und die verbleibenden aktiven Zeilen dazwischen angeordnet sind.

10. Decoder für ein mit herkömmlichen Fernsehnormen kompatibel übertragbares Fernsehsignal, bei dem das Quell-Bildsignal mit einem Raster entsprechend einem vergrößerten Bild-Seiten-Verhältnis, insbesondere von 16:9, abgetastet wurde und das codierte Bildsignal sowohl mit herkömmlichen 4:3-Empfängern als auch mit Empfängern für das vergrößerte Bild-Seiten-Verhältnis decodierbar ist und bei herkömmlichen 4:3-Empfängern abgesonderte Zeilen am oberen und unteren Bildrand angeordnet sind und die verbleibenden aktiven Zeilen dazwischen angeordnet sind, und der enthält:
   - einen Farb-Decoder (70);
   - eine nachfolgende Bildsignal-Verarbeitungsstufe (80), die die verbleibenden aktiven Zeilen vertikal mit einem Faktor 4/3 dekomprimiert, wobei die abgesonderten Zeilen, gegebenenfalls nach einer einer coderseitigen Verwürfelung entsprechenden Entwürfelung, so mit diesen vertikal dekomprimierten Zeilen kombiniert werden, daß wieder die dem Quell-Bildsignal entsprechenden Zeilenreihenfolge entsteht.

**Claims**

1. A television transmission process compatible with conventional television standards, wherein at the picture source end scanning is carried out with a raster corresponding to an enlarged picture-aspect ratio, in particular of 16:9, characterised by the following process steps:
   a) Every fourth one of the active lines of the picture signal is separated and the remaining active lines are correspondingly vertically compressed, so that these remaining lines are arranged one beside another again in the raster;
   b) in the lines thus released at the upper and lower picture edges the separated fourth lines are added, for example in scrambled form;
   c) the resultant picture signal is transmitted in coded form and
   d) from the received, decoded picture signal the original picture signal with the enlarged picture-aspect ratio is reconstructed again in that the lines added at the upper and lower picture edges, optionally following descrambling, are inserted in the correct line sequence into the other, vertically decompressed lines,
   wherein the signals can be decoded both with conventional 4:3 receivers (Figure 2c) and with receivers (Figure 2b), adapted to the system, for the enlarged picture-aspect ratio, and in the case of conventional 4:3 receivers the separated fourth lines are arranged at the upper and lower picture edges and the remaining active lines are arranged in between.

2. A television transmission process compatible with conventional television standards, wherein at the picture source end scanning is carried out with a raster corresponding to an enlarged picture-aspect ratio, in particular of 16:9, characterised by the following process steps:
   a) for four respective consecutive active lines of the picture signal, three lines are formed by vertical interpolation;

b) for each group of four consecutive lines one line is separated and added, for example in scrambled form, in the lines released by the vertical interpolation at the upper and lower picture edges;

c) the resultant picture signal is transmitted in coded form and

d) from the received, decoded picture signal the original picture signal with the enlarged picture-aspect ratio is reconstructed in that the lines added at the upper and lower picture edges, optionally following descrambling, are inserted in the correct line sequence into the other vertically correspondingly inversely interpolated lines,

wherein the signals can be decoded both with conventional 4:3 receivers (Figure 2c) and also with receivers (Figure 2b), adapted to the system, for the enlarged picture-aspect ratio, and in the case of conventional 4:3 receivers the separated fourth lines are arranged at the upper and lower picture edges and the remaining active lines are arranged in between.

3. A television transmission process as claimed in Claim 1 or 2, wherein at the picture source end scanning is carried out without interlacing, characterised in that prior to step a) or following step b) a conversion into the desired television standard with interlacing takes place.

4. A television transmission process as claimed in one of Claims 1 to 3, wherein at the picture source end scanning is carried out with double the number of lines, characterised in that prior to step a) or following step b) a down conversion into the number of lines corresponding to the desired television standard takes place.

5. A television transmission process as claimed in one of Claims 3 or 4, characterised in that in step d) a conversion into a picture signal which has a higher number of lines and/or is non-interlaced takes place.

6. A television transmission process as claimed in one or several of claims 1, 2, 3 and 5, characterised in that in the released lines at the upper and lower picture edges items of digital additional information are transmitted, with which, from the lines transmitted in vertically compressed or interpolated fashion, a non-interlaced picture signal or a picture signal with increased horizontal resolution can be formed.

7. A television transmission process as claimed in Claim 6, characterised in that the items of additional information contain coefficients of a monodimensional, vertical, discrete cosine transformation.

8. A television transmission process as claimed in one or several of the preceding claims, characterised in that horizontal frequency components of the raster scanned at the picture source end, the frequency of which exceeds the known, maximum transmittable frequency of the transmission channel, are arranged within substantially unused multidimensional spectral spaces of the transmitted television signal.

9. A coder for a television signal which can be transmitted so as to be compatible with conventional television standards, wherein the source picture signal has been scanned with a raster corresponding to an enlarged picture-aspect ratio, in particular of 16:9, and which comprises:

   - a picture signal processing stage (30) which by vertical interpolation (31) for four respective consecutive active lines of the picture signal forms three consecutive lines and which, for each group of four consecutive active lines of the picture signal, separates (33) one line and adds (32) this line, for example in scrambled form, in the lines, released by the vertical interpolation, at the upper and lower picture edges;
   - a following colour coder (40),

wherein the colour-coded signals can be decoded both with conventional 4:3 receivers and with receivers, adapted to the system, for the enlarged picture-aspect ratio, and in the case of conventional 4:3 receivers the separated fourth lines are arranged at the upper and lower picture edges and the remaining active lines are arranged in between.

10. A decoder for a television signal which can be transmitted so as to be compatible with conventional television standards, wherein the source picture signal has been scanned with a raster corresponding to an enlarged picture-aspect ratio, in particular of 16:9, and the coded picture signal can be decoded both with conventional 4:3 receivers and also with receivers for the enlarged picture-aspect ratio, and in the case of conventional 4:3 receivers separated lines are arranged at the upper and lower picture edges and the remaining active lines are arranged in between and which comprises:

- a colour decoder (70);
- a following picture signal processing stage (80) which vertically decompresses the remaining active lines with a factor 4/3, where the separated lines, optionally following descrambling corresponding to scrambling carried out at the coder end, are combined with these vertically decompressed lines in such manner that the line sequence corresponding to the source picture signal is restored.

**Revendications**

1. Procédé de transmission de télévision compatible avec les normes de télévision traditionnelles dans lequel le balayage s'effectue côté source d'images avec une grille selon un rapport des bords de l'image agrandi, en particulier selon un rapport de 16:9, **caractérisé** par les étapes de procédé suivantes :

   a) Chaque quatrième ligne des lignes actives du signal image est isolée et les lignes actives qui restent sont comprimées verticalement en conséquence pour que ces lignes qui restent soient à nouveau juxtaposées en grille :

   b) les quatrièmes lignes isolées sont ajoutées dans les lignes qui deviennent ainsi libres sur le bord supérieur et sur le bord inférieur de l'image, par exemple sous forme brouillée ;

   c) le signal image qui en résulte est transmis de manière codée et

   d) le signal image d'origine est reconstruit avec le rapport des bords de l'image agrandi à partir du signal image décodé reçu par le fait que les lignes ajoutées sur le bord supérieur et sur le bord inférieur de l'image sont insérées, le cas échéant après que le brouillage ait été effectué, dans l'ordre correct des lignes dans les autres lignes qui sont à nouveau décomprimées verticalement,

   les signaux pouvant être décodés aussi bien avec des récepteurs traditionnels à 4:3 (figure 2c) qu'avec des récepteurs adaptés au système (figure 2b) pour le rapport des bords de l'image agrandi et, pour les récepteurs traditionnels à 4:3, les quatrièmes lignes isolées étant placées sur le bord supérieur et sur le bord inférieur de l'image et les lignes actives qui restent étant intercalées.

2. Procédé de transmission de télévision compatible avec les normes de télévision traditionnelles dans lequel le balayage s'effectue côté source d'images avec une grille selon un rapport des bords de l'image agrandi, en particulier selon un rapport de 16:9, **caractérisé** par les étapes de procédé suivantes :

   a) Trois lignes sont formées par une interpolation verticale pour respectivement quatre lignes actives successives du signal image ;

   b) une ligne est isolée pour chaque groupe de quatre lignes successives et ajoutée dans les lignes qui deviennent libres par l'interpolation verticale sur le bord supérieur et sur le bord inférieur de l'image, par exemple sous forme brouillée ;

   c) le signal image qui résulte est transmis de manière codée et

   d) à partir du signal image décodé reçu, le signal image d'origine est reconstruit avec le rapport des bords de l'image agrandi par le fait que les lignes ajoutées sur le bord supérieur et sur le bord inférieur de l'image sont insérées, le cas échéant après que le brouillage ait été effectué, dans l'ordre correct des lignes dans les autres lignes interpolées verticalement dans le sens inverse,

   les signaux pouvant être décodés aussi bien avec des récepteurs traditionnels à 4:3 (figure 2c) qu'avec des récepteurs adaptés au système (figure 2b) pour le rapport des bords de l'image agrandi et, pour les récepteurs traditionnels à 4:3, les quatrièmes lignes isolées étant placées sur le bord supérieur et sur le bord inférieur de l'image et les lignes actives qui restent étant intercalées.

3. Procédé de transmission de télévision selon la revendication 1 ou 2 dans lequel le balayage a lieu côté source d'images sans entrelacement, **caractérisé en ce** qu'une transformation dans la norme de télévision souhaitée avec entrelacement a lieu avant l'étape a) ou après l'étape b).

4. Procédé de transmission de télévision selon l'une des revendications 1 à 3 dans lequel le balayage a lieu côté source d'images avec le double du nombre de lignes, **caractérisé en ce** qu'une conversion vers le bas dans le nombre de lignes de la norme de télévision souhaitée a lieu avant l'étape a) ou après l'étape b).

5. Procédé de transmission de télévision selon l'une des revendications 3 ou 4, **caractérisé en ce** qu'une conversion dans un signal image à plus grand nombre de lignes et/ou sans entrelacement a lieu lors de l'étape d).

**6.** Procédé de transmission de télévision selon l'une ou plusieurs des revendications 1, 2, 3 et 5, **caractérisé en ce** que des informations numériques supplémentaires sont transmises dans les lignes qui deviennent libres sur le bord supérieur et sur le bord inférieur de l'image, informations avec lesquelles un signal image sans entrelacement ou un signal image avec une résolution horizontale plus élevée peut être formé à partir des lignes transmises en étant comprimées verticalement ou en étant interpolées.

**7.** Procédé de transmission de télévision selon la revendication 6, **caractérisé en ce** que les informations supplémentaires contiennent des coefficients d'une transformation à cosinus discrète verticale unidimensionnelle.

**8.** Procédé de transmission de télévision selon l'une ou plusieurs des revendications précédentes, **caractérisé en ce** que des portions de fréquence horizontales de la grille balayée côté source d'images, dont la fréquence dépasse la fréquence maximale transmissible connue du canal de transmission, sont placées à l'intérieur d'espaces spectraux multidimensionnels substantiellement non utilisés du signal de télévision transmis.

**9.** Codeur pour un signal de télévision qui peut être transmis en étant compatible avec les normes de télévision traditionnelles pour lequel le signal image de la source a été balayé avec une grille selon un rapport de bords de l'image agrandi, en particulier avec un rapport de 16:9 et qui contient :
- un étage de traitement du signal image (30) qui forme trois lignes successives par une interpolation verticale (31) pour respectivement quatre lignes actives successives du signal image et qui isole une ligne pour chaque groupe de quatre lignes successives actives du signal image et l'ajoute (32) dans les lignes qui deviennent libres par l'interpolation verticale sur le bord supérieur et sur le bord inférieur de l'image, par exemple sous forme brouillée ;
- un codeur couleur qui suit (40),

les signaux à codage couleur pouvant être décodés aussi bien avec des récepteurs traditionnels à 4:3 qu'avec des récepteurs adaptés au système pour le rapport des bords de l'image agrandis et les quatrièmes lignes séparées étant placées dans les récepteurs traditionnels à 4:3 sur le bord supérieur et sur le bord inférieur de l'image et les lignes actives qui restent étant intercalées.

**10.** Décodeur pour un signal de télévision qui peut être transmis en étant compatible avec les normes de télévision traditionnelles pour lequel le signal image de la source a été balayé avec une grille selon un rapport de bords de l'image agrandi, en particulier avec un rapport de 16:9, et le signal image codé pouvant être décodé aussi bien avec des récepteurs traditionnels à 4:3 qu'avec des récepteurs pour le rapport des bords de l'image agrandi et les lignes séparées étant placées dans les récepteurs traditionnels à 4:3 sur le bord supérieur et sur le bord inférieur de l'image et les lignes actives qui restent étant intercalées et qui contient :
- un décodeur couleur (70);
- un étage de traitement du signal image (80) qui suit qui décomprime les lignes actives qui restent verticalement avec un facteur 4/3, les lignes séparées étant combinées, le cas échéant après un brouillage correspondant à un brouillage côté codeur, avec ces lignes décomprimées verticalement de telle manière qu'il se forme à nouveau l'ordre des lignes qui correspond au signal image de la source.

Fig. 1

Fig. 2